# EUROPEAN PATENT APPLICATION

(11) **EP 2 775 489 A1**
(43) Date of publication of application: **10.09.2014**
(21) Application number: 13158372.6
(22) Date of filing: 08.03.2013
(51) Int. Cl.: H01G 4/38, H01G 4/224, H01G 4/228

(54) **Capacitor arrangement**

(71) Applicant: ABB Technology AG, 8050 Zürich (CH)
(72) Inventor: Tschentscher, Malte, 45699 Herten (DE); Riechert, Uwe, 8192 Glattfelden (CH)
(74) Representative: ABB Patent Attorneys

(57) **Abstract**

Capacitor arrangement and capsuled gas insulated capacitor comprising a capacitor arrangement having a low space consumption by providing a folded arrangement of capacitors being electrically connected in series.

## Description

### FIELD OF THE INVENTION

The present invention relates to a high voltage device, and in particular to a high voltage capacitor arrangement for a capsuled gas insulated high voltage application, wherein the high voltage capacitor arrangement has a space-saving geometry.

### BACKGROUND OF THE INVENTION

For high voltage applications, capacitors are used for several purposes. For example, in high voltage DC applications, capacitors are used for electric filtering and/or voltage buffering. In AC applications, capacitors for example are used for capacitive voltage dividers for controlling the voltage distribution in power switch gears. From DE 197 20 788 A1, a metal-capsuled gas insulated capacitor is known, wherein a housing is provided and within the housing three capacitor elements are arranged.

### SUMMARY OF THE INVENTION

It is desired to provide a high voltage capacitor arrangement having a space-saving construction in order to minimize the volume of the high voltage capacitor arrangement.

The invention provides a high voltage capacitor arrangement for a capsuled gas insulated high voltage application, a capsuled gas insulated capacitor having a high voltage capacitor arrangement, and a method for using a high voltage capacitor arrangement according to the subject-matter of the independent claims. Further embodiments are incorporated in the dependent claims.

It should be noted that the following described exemplary embodiments of the invention apply also for the high voltage capacitor arrangement, the capsuled gas insulated capacitor, and the method for using the high voltage capacitor arrangement.

According to an exemplary embodiment of the invention, there is provided a high voltage capacitor arrangement for a capsuled gas insulated high voltage application, wherein the capacitor arrangement comprises a first capacitor unit having a longitudinal extension and having a first terminal and a second terminal, a second capacitor unit having a longitudinal extension and having a third terminal and a fourth terminal, and a third capacitor unit having a longitudinal extension and having a fifth terminal and a sixth terminal, wherein the second terminal is electrically connected to the third terminal and the fourth terminal is electrically connected to the fifth terminal, such that the first capacitor unit, the second capacitor unit and the third capacitor unit are electrically connected in series and spatially arranged beside one to another.

Thus, it is possible to reduce the entire length of the capacitor arrangement, as the first, second, and third capacitor units are arranged beside to each other, but are connected in series. Thus, each of the capacitor units, given that the first, second, and third capacitor unit are of the same electrical dimension, is applied to 1/3 of the total voltage, when using three capacitor units. As the first, second and third capacitor unit are arranged side by side, which may for particular embodiment seem as a parallel arrangement, the entire length of the capacitor arrangement may be reduced to about 1/3. Even if it should be required to provide a larger diameter of the arrangement, the entire arrangement may require significantly lower volume. It should be noted that a longitudinal extension defines a longitudinal axis of the high voltage capacitor arrangement. Further, it should be noted that spatially arranged side by side or spatially arranged beside one to another does not require a direct contact, but also includes capacitor units being spaced apart from each other. However, it should be noted that, when providing a sufficient isolation, also an abutting arrangement may be provided. It should be noted that the term high voltage means are rated voltage larger than 1 000 volts. In particular, the tem high voltage includes voltage levels, where particular isolation distance requirements have to be considered. The arrangement of the first, second and third capacitor unit may be in form of a Z, or in form of an S, or in form of a meander, which means that the entire line of the first, second and third capacitor is quasi folded in order to reduce the entire length.

According to an exemplary embodiment of the invention, the second capacitor unit comprises at least three capacitor lines including a first capacitor line, a second capacitor line, and a third capacitor line, one terminal of each thereof being connected to the third terminal and the other terminal of each thereof being connected to the fourth terminal, and the third capacitor unit comprises at least three capacitor lines including a first capacitor line, a second capacitor line, and a third capacitor line, one terminal of each thereof being connected to the fifth terminal, and the other terminal of each thereof being connected to the sixth terminal, wherein the at least three capacitor lines of the second capacitor unit and the at least three capacitor lines of the third capacitor unit are distributed over a perimeter, in particular a circumference around the first capacitor unit.

Thus, the at least three capacitor lines of the second capacitor unit may be electrically connected in parallel in order to increase the capacitance. The same is valid for the at least three capacitor lines of the third capacitor unit. By providing a plurality of capacitor lines for the second capacitor unit as well as for the third capacitor unit, the geometric arrangement may be optimized, as the capacity may be distributed to the plurality of capacitor lines. Thus, instead of for example one large diameter, a plurality of smaller diameters may be used so as to decrease the entire diameter or dimension of the capacitor arrangement, in particular, when providing the capacitor arrangement within a tubular housing. The first capacitor unit may be arranged in the center of the arrangement, wherein the plurality of capacitor lines of the second and the third capacitor unit may be arranged in a space-saving manner around the first capacitor unit.

According to an exemplary embodiment of the invention, the capacitor lines of the second capacitor unit and the capacitor lines of the third capacitor unit are coaxially arranged about a longitudinal axis defined by the overall shape of the first capacitor unit. Thus, the isolation distances between the first capacitor unit over the second capacitor unit and the third capacitor unit, in particular over the capacitor lines of the second capacitor unit, and the capacitor lines of the third capacitor unit may be optimized so as to provide a sufficient isolation distance between the capacitor units, respectively.

According to an exemplary embodiment of the invention, the at least three capacitor lines of the second capacitor unit and the at least three capacitor lines of the third capacitor unit are alternately and evenly distributed over a perimeter, in particular a circumference around the first capacitor unit.

Thus, in particular when having the same number of capacitor lines for the second capacitor unit and the third capacitor unit, a symmetric arrangement of the capacitor lines can be achieved and the field distribution within capacitor arrangement may be equalized.

According to an exemplary embodiment of the invention, the cross-sections, when seen in the direction of the longitudinal axis of the at least three capacitor lines of the second capacitor unit beside one to another are arranged along a circular arc, and cross-sections, when seen in the direction of the longitudinal axis, of the at least three capacitor lines of the third capacitor unit beside one to another are arranged along a circular arc.

Thus, in particular when using a capacitor arrangement with for example exactly three capacitor units, the first capacitor unit may be provided in the center, wherein the second capacitor unit may be provided in one hemisphere, wherein the third capacitor unit may be arranged in the other hemisphere. The hemisphere may be considered as an angular segment of tubular housing. In the present embodiment, the hemisphere is one half and the other hemisphere is the other half. Thus, the plurality of capacitor lines can be arranged in a smaller distance with respect to each other, as the plurality of capacitor lines of one capacitor unit may have the same voltage level, so that no or only a reduced isolating distance is required. It should be noted, that the capacitor arrangement may also comprise more than three capacitor units, for example a forth and a fifth capacitor unit, so that the capacitor units may be arranged in a double Z form, or a double S form, or a double meander form.

According to an exemplary embodiment of the invention, the first capacitor unit comprises at least three parallel capacitor lines including a first capacitor line, a second capacitor line, and a third capacitor line, one terminal of each thereof being connected to the first terminal, and the other terminal of each thereof being connected to the second terminal.

Thus, not only the second and the third capacitor unit may be formed of plurality of capacitor lines, but also the first capacitor unit, being arranged centrically, may be formed by a plurality of capacitor lines. It should be noted, that the first capacitor unit may also be provided in the form of a single capacitor line, which may be of a larger diameter, so as to have same capacity as for example the sum of the plurality of capacity lines of the first capacitor unit.

According to an exemplary embodiment of the invention, the second capacitor unit and the third capacitor unit each having a cross-section crossing the longitudinal extension of the respective capacitor unit, the cross-section having a longitudinal extension along a circular arch.

Thus, it is possible to provide in particular the second and the third capacitor unit not only in a form of a plurality of capacitor lines, but also as a single capacitor line, wherein this single capacitor line may be of a more or less kidney form cross-section so as to embrace the centrically arranged first capacitor unit. The kidney form results in an optimized cross-section with respect to the isolation distance over the first capacitor unit as well as a tubular housing as well as the capacitance of the respective capacitor unit.

According to an exemplary embodiment of the invention, the second terminal and the third terminal are provided by a first electrode, and the fourth terminal and the fifth terminal are provided by a second electrode.

Thus, the second terminal and the third terminal together may realize the first electrode, and the fourth terminal and the fifth terminal together may realize the second electrode. The first electrode and the second electrode for example may be provided in form of a disc. In particular, the first electrode may be of a disc form, wherein the second electrode may also be formed by a ring or a taper having for example a central bushing for contacting the first terminal. The first and second electrode may have a form so as to serve as a stress degrader in view of the electric field.

According to an exemplary embodiment of the invention, at least one of the capacitor units, the first capacitor unit, the second capacitor unit and/or the third capacitor unit, comprises a plurality of capacitor elements connected in series.

Thus, even for higher voltage levels, a capacitor arrangement may be provided, wherein the total voltage drop of one capacitor unit distributes over each of the plurality of capacitor elements connected in series.

According to an exemplary embodiment of the invention, the capacitor elements of the first capacitor unit, the capacitor elements of the second capacitor unit and the capacitor elements of the third capacitor unit are substantially of the same longitudinal dimension.

In particular, the capacitor elements of the first capacitor unit, the capacitor elements of the second capacitor unit, and the capacitor elements of the third capacitor unit may be also of the same cross-sectional dimension, in particular of a circular cross-sectional dimension. In particular when using the same capacitor elements for the capacitor elements of the first capacitor unit, the capacitor elements of the second capacitor unit, and the capacitor elements of the third capacitor unit, only one type of capacitor elements may be used for building up the capacitor arrangement. Such a capacitor arrangement may be of a modular type, so that according to need, according to the voltage level, the capacitor arrangement may be adapted using only one type of capacitor element.

According to an exemplary embodiment of the invention, at least one intermediate terminal may be provided, which intermediate terminals of parallel capacitor elements of the second capacitor unit of corresponding voltage levels are connected to respective electrodes in form of an element support electrode, and intermediate terminals of parallel capacitor elements of the third capacitor unit of corresponding voltage levels are connected to respective electrodes in form of an element support electrode.

With this respect, the term corresponding voltage levels mean voltage levels which are ratably the same, so that substantially no impact is expected when connecting elements of such corresponding voltage levels. The element support electrodes may be used to support and hold the capacitor elements of the capacitor units on position. It should be understood, that when providing a plurality of parallel capacitor lines each with a plurality of capacitor elements, also a plurality of element support electrodes may be used, so that each of the respective electrodes may operate as a mounting element, stress degrading element and/ or supporting element for terminals of the capacitor elements having a corresponding voltage level.

According to an exemplary embodiment of the invention, at least one of the first electrode, the second electrode, and the element support electrodes are dimensioned so as to extend over the outer cross-sectional dimension of the respective capacitor unit, capacitor line and/or capacitor element and comprising a rounded edge.

Thus, the first, the second, and/or the element support electrodes may be used as a controlling element or stress degrade for controlling the electric field. The size and dimension of the respective electrodes may be adapted according to the respective voltage level and the required isolating distance over other voltage levels, in particular those of other capacitor elements or the housing.

According to an exemplary embodiment of the invention, when seen in the direction of the longitudinal axis, the first electrode has a cross-section being complementary shaped to a cross-section of the sixth terminal, and together with the sixth terminal at least partially forms a circular enveloping curve.

Thus, the first electrode may serve as a support element, in particular a support disc for receiving the respective second terminals of the capacitor lines of the first capacitor unit and the respective third terminals of the capacitor lines of the second capacitor unit. The sixth terminal, which also may be formed by a respective disc electrode, may be in the general form of a kidney. Between the sixth terminal and the first electrode there may an almost constant distance, which distance may be equal to the distance to a tubular housing. This particular form of the first element may be used when the capacitor lines of the second capacitor unit are arranged in one hemisphere, and the capacitor lines of the third capacitor unit are arranged in the other hemisphere. In other words, a circular envelope traverse to the longitudinal axis may cover the sixth electrode and the first electrode constituting the connection of the second terminal and the third terminal.

According to an exemplary embodiment of the invention, when seen in the direction of the longitudinal axis, the first electrode has a cross-section in form of an equilateral triangle having rounded corners and concave sides.

This form of the first electrode may be particularly used when arranging the capacitor lines of the second capacitor unit and the third capacitor unit alternately. The outer dimension of the rounded corners may be arranged on a virtual circle, so that between two rounded corners a sixth terminal of the capacitor unit or the respective sixth terminals of the three capacitor lines may be arranged, such that the outer dimension of the respective sixth terminal(s) does not exceed the virtual circle.

According to an exemplary embodiment of the invention, one of the capacitor lines of the second capacitor unit is inclined with respect to a respective capacitor line of the first capacitor unit and a respective capacitor line of the third capacitor unit, such that the isolating distance between the capacitor line of the first capacitor unit and the capacitor line of the second capacitor unit at the second and third terminal is smaller than the isolating distance between the capacitor line of the first capacitor unit and the capacitor line of the second capacitor unit at the first and fourth terminal, and the isolating distance between the capacitor line of the second capacitor unit and the capacitor line of the third capacitor unit at the fourth and fifth terminal is smaller than the isolating distance between the capacitor line of the second capacitor unit and the capacitor line of the third capacitor unit at the third and sixth terminal.

Thus, the isolating distance between a capacitor line of one capacitor unit and a capacitor line of another capacitor unit may be smaller, if the voltage level between this particular position of the both capacitor lines of different capacitor units is lower, which in total may result in a lower totally required diameter of the capacitor arrangement. In other words, if the voltage level between two capacitor lines is low, also the distance between these both capacitor lines is low, wherein if the voltage level between the both capacitor lines is high, also the distance between these both capacitor lines is high. It should be understood, that the entire capacitor line may be inclined, whereas also a plurality of capacitor elements of the respective capacitor line may be arranged in parallel, but displaced with respect to each other, so as to form a stepped arrangement with increasing stepped distance with respect to each other. In other words, two capacitor elements of two different capacitor units may be arranged close to each other, if the respective voltage level is low, wherein two capacitor elements of the same both capacitor lines of different capacitor units are arranged in parallel, but larger distance, if the voltage level between those both capacitor elements is higher.

According to an exemplary embodiment of the invention, a capsuled gas insulated capacitor is provided, which capsuled gas insulated capacitor comprises a housing tube and a high voltage capacitor arrangement as described above, wherein the second capacitor unit and the third capacitor unit have an equivalent isolation distance over the housing.

Thus, an entire capsuled gas insulated capacitor as one module may be provided, having an optimized dimension with respect to space consumption. The switchgear component may comprise a gas tight chamber in the metal encapsulation. The capacitor arrangement within the metal encapsulation with one end, e.g. the first terminal, may be isolated over the metal encapsulation or housing. The other end, e.g. the sixth terminal may be electrically connected to the housing. The housing may be on ground potential.

According to an exemplary embodiment of the invention, there is provided a capsuled gas insulated capacitor, which capsuled gas insulated capacitor comprises a housing tube and a high voltage capacitor arrangement, as described above with respect to the inclined capacitor lines, wherein the first terminal of the capacitor unit is arranged on a center axis of the housing, and the sixth terminal of the third capacitor unit is connected to the housing.

According to an exemplary embodiment of the invention, there is provided a method of use of a high voltage capacitor arrangement as described above, wherein the use includes the use as an electric filtering unit in a high voltage DC application and/or a voltage buffering application in a high voltage DC application.

It may be seen as a gist of the present invention to provide a quasi folded arrangement of the capacitor units so as to provide a shorter capacity arrangement while maintaining the entire capacitance. This reduces the length, however may increase the diameter. However, the measure of increasing of the diameter has a significantly lower effect on the volume than the measure of decreasing of the length. Therefore, when maintaining the capacity and voltage level, quasi folding significantly reduces the required volume and therefore the amount of the isolating gas. A relevant parameter for dimensioning a gas insulated capacitor is the required isolation distance.

It should be noted that the above features may also be combined, the combination of the above features may also lead to synergetic effects, even if not explicitly described in detail.

These and other aspects of the invention will become apparent from and elucidated with reference to the embodiments described hereinafter.

### BRIEF DESCRIPTION OF THE DRAWINGS

Exemplary embodiments of the present invention will be described in the following with reference to the following drawings.
Fig. 1 illustrates a capacitor arrangement according to an exemplary embodiment of the invention.
Fig. 2 illustrates a detail of a capacitor arrangement according to the exemplary embodiment of Fig. 1.
Fig. 3 illustrates a cross-sectional view of the capacitor arrangement according to an exemplary embodiment according to Fig. 1.
Fig. 4 illustrates another exemplary embodiment of the capacitor arrangement according to the present invention.
Fig. 5 illustrates a detail of the capacitor arrangement according to Fig. 4.
Fig. 6 illustrates a cross-sectional view of the capacitor arrangement according to Fig. 4.
Fig. 7 illustrates a cross-sectional view of a capacitor arrangement according to a further exemplary embodiment of the invention.
Fig. 8 illustrates a cross-sectional view of a capacitor arrangement according to a further exemplary embodiment of the invention.
Fig. 9 illustrates an electrode arrangement of the capacitor arrangement according to Fig. 1.
Fig. 10 illustrates an electrode arrangement of the capacitor arrangement according to Fig. 4.
Fig. 11 illustrates a schematic buildup of a capacitor arrangement according to Fig. 1.
Fig. 12 illustrates a schematic buildup of a capacitor arrangement according to Fig. 4.
Fig. 13 illustrates a voltage distribution in view of a cross-sectional view of a capacitor arrangement according to Fig. 4 at the end of the first, fourth and fifth terminal.
Fig. 14 illustrates a voltage distribution in view of a cross-sectional view of a capacitor arrangement according to Fig. 4 at the end of the second, third and sixth terminal.
Fig. 15 illustrates a part of a cross-sectional view of a capacitor arrangement according to a further exemplary embodiment of the invention.
Fig. 16 illustrates a part of a side-elevated view of the capacitor arrangement of Fig. 15.

### DETAILED DESCRIPTION OF EXEMPLARY EMBODIMENTS

For direct current (DC) transmission, it is required to install capacities in the transmission system. The capacitors are used for filter applications and/or for voltage buffering. As the voltage to be applied is high and the capacitors have a certain capacity, there are particular requirements for the elements to be used. In particular, there may be a requirement of a space saving geometry of the elements, wherein the elements have to fulfill electrical and mechanical requirements. When using capacitors, it may be useful to use gas as an isolation medium and to provide a capsuled capacitor arrangement. Thus, the distance between the elements and the entire dimensions of the components may be significantly reduced so as to keep the volume of the isolation gas low. When connecting capacitors between the high voltage level and the ground potential, the potential level is applied via the gas insulation distance as well as the components of the capacitor arrangement. The present invention provides for an arrangement of capacitor elements so as to provide an optimized arrangement with respect to the required space and volume. In other words, the present invention reduces the device volume of capacitor arrangements significantly, in particular for capsule gas insulated capacitor arrangements.

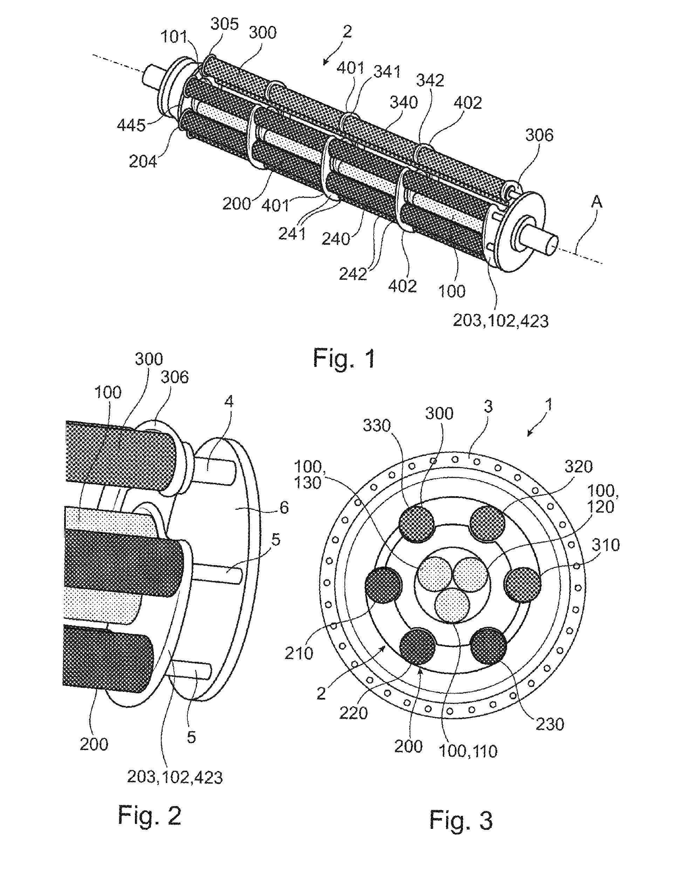

Fig. 1 illustrates an exemplary embodiment of a capacitor arrangement 2 of the present invention. The capacitor arrangement 2 of Fig. 1 comprises in total 3 capacitor units, a first capacitor unit 100, a second capacitor unit 200, and a third capacitor unit 300. It should be understood, that a capacitor arrangement may also include additional capacitor units, like for example a fourth and a fifth capacitor unit, which, however, is not explicitly described and illustrated with respect to the figures. In Fig. 1, the second capacitor unit 200 and the third capacitor unit 300 each comprise a plurality of capacitor lines. In Fig. 1 the second capacitor unit 200 comprises three capacitor lines, a first capacitor line 210, a second capacitor line 220 and a third capacitor line 230. An illustration of the capacitor lines 210, 220, 230 as well as the capacitor lines 310, 320, 330 is illustrated in further detail in Fig. 3. Fig. 1 illustrates an exemplary embodiment of the invention, where the capacitor lines of the second capacitor unit and the capacitor lines of the third capacitor unit are arranged along an outer perimeter, in particular along a circular circumference, wherein concentrically to the arrangement of the capacitor lines of the second capacitor unit and the capacitor lines of the third capacitor unit a first capacitor unit 100 is arranged. Also the first capacitor unit 100 may have a plurality of capacitor lines, which is illustrated in further detail with respect for example to Fig. 3.

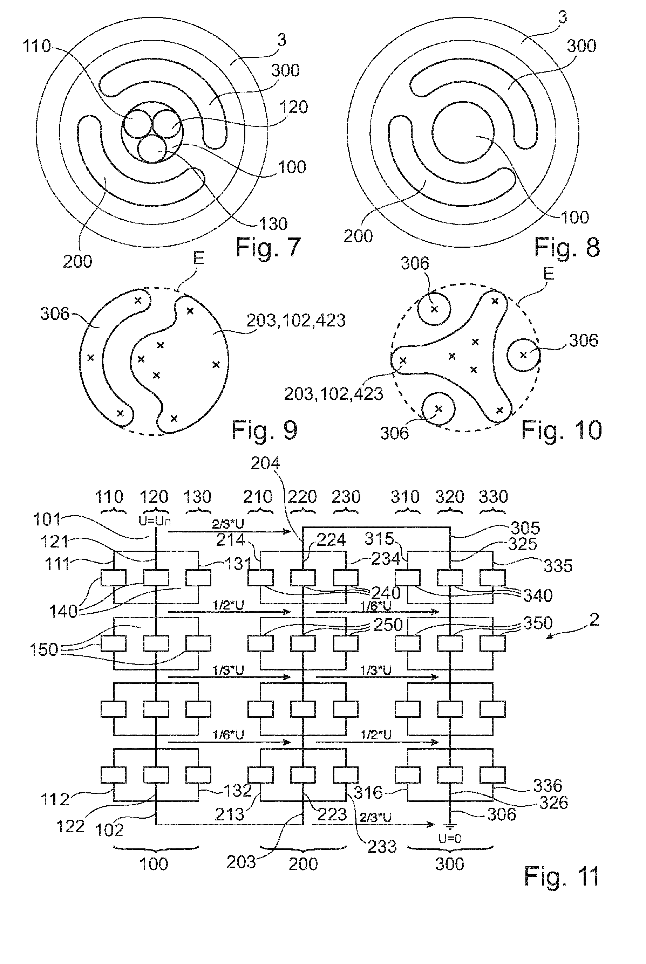

For explaining the structural electrical buildup of the capacitor arrangement of Fig. 1, it is referred to Fig. 11. The references used in Fig. 11 are the same as those used with respect to Fig. 1, wherein the reference numbers illustrate corresponding elements. The capacitor arrangement 2 comprises the three capacitor units 100, 200, and 300. Each of the capacitor lines according to the embodiment illustrated with respect to Fig. 1 and Fig. 11 include three capacitor lines, these are capacitor lines 110, 120, and 130 for the first capacitor unit, capacitor lines 210, 220, and 230 for the second capacitor unit and capacitor lines 310, 320, and 330 for the third capacitor unit 300. The first capacitor unit 100 comprises a first terminal 101 at the one end and a second terminal 102 at the other end. The second capacitor unit 200 has a third terminal 203 at the one end and the fourth terminal 204 at the other end. The third capacitor unit 300 has a fifth terminal 305 at the one end and the sixth terminal 306 at the other end. The second terminal 102 is connected to the third terminal 203, and the fourth terminal 204 is connected to the fifth terminal 305. Thus, the first capacitor unit 100, the second capacitor unit 200 and the third capacitor unit 300 are connected in series with respect to their electrical properties, whereas the physical units of the first, second, and third capacitor unit are arranged in parallel or beside to each other. As the three capacitor units are electrically connected in series, each of the capacitor units, given that the three capacitor units are of the same electrical dimension, have a voltage drop of 1/3 of the total voltage Un. As the second terminal 102 and the third terminal 203 are connected, these both terminals are at the same voltage level. The same is valid for the fourth terminal 204 and the fifth terminal 305. Thus, the voltage drop between the first terminal 101 on the one hand and the fourth and fifth terminal 204, 305 on the othe hand is 2/3 of the total voltage Un. The same is valid for the voltage level between the second terminal and the third terminal 102, 203, which are on the same voltage level, over ground potential, which is here connected to the sixth terminal 306. Fig. 11 illustrates the stepped voltage drop along the capacitor units. Each capacitor unit 100, 200, 300 may have a plurality of capacitor lines, as described above. Each of the capacitor lines again may have a plurality of capacitor elements 140, 150. In case the plurality of capacitor lines of a respective capacitor unit are spatially arranged adjacent to each other, it is possible to connect the respective terminals of the capacitor elements having a corresponding voltage level. In the exemplary embodiment of Fig. 11, the elements 140 with one terminal are connected to a first common connection, and also with the respective other terminal are connected to a second common connection. The capacitor lines each have a respective terminal, wherein the first terminal 111 of the first capacitor line 110, the first terminal 121 of the second capacitor line 120, and the first terminal 131 of the third capacitor line 130 are connected to the first terminal 101. In the same way, the second terminal 112 of the first capacitor line 110, the second terminal 122 of the second capacitor line 120, and the second terminal 132 of the third capacitor line 130 are connected to the second terminal 102. The capacitor elements and capacitor lines of the second capacitor unit are connected similarly. For the second capacitor unit, the third terminal 213 of the first capacitor line 210, the third terminal 223 of the second capacitor line 220, and the third terminal 223 of the third capacitor line 230 are commonly connected to the third terminal 203. The fourth terminal 214 of the first capacitor line 210, the fourth terminal 224 of the second capacitor line 220, and the fourth terminal 234 of the third capacitor line 230 are commonly connected to the fourth terminal 204. For the third capacitor unit, the elements are connected similarly. The fifth terminal 315 of the first capacitor line 310, the fifth terminal 325 of the second capacitor line 320, and the fifth terminal 335 of the third capacitor line 330 are commonly connected to the fifth terminal 305. The sixth terminal 316 of the first capacitor line 310, the sixth terminal 326 of the second capacitor line 320 and the sixth terminal 336 of the third capacitor line 330 are connected to the sixth terminal 306.

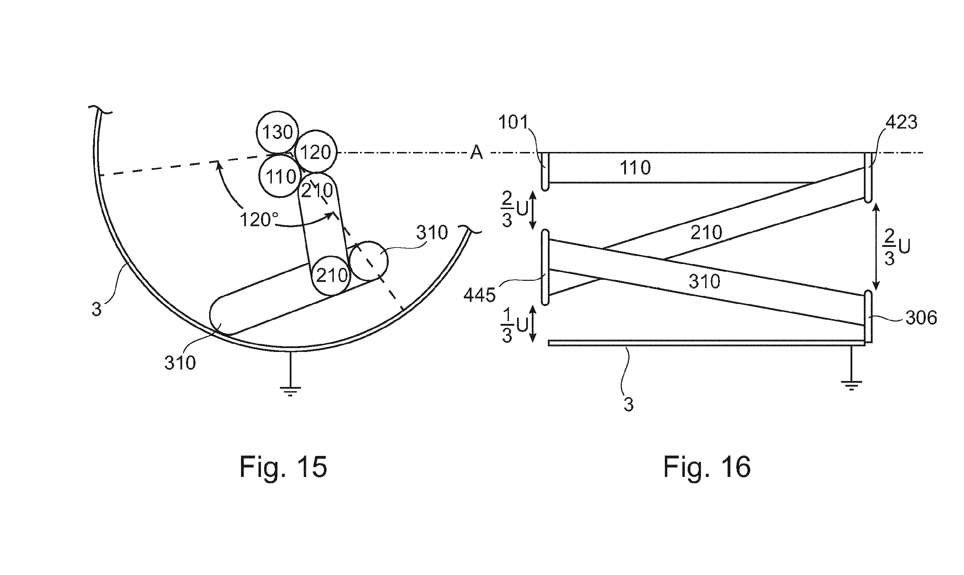

As can be seen with respect to Fig. 1, in particular terminals 241 of capacitor elements 240 of the second capacitor unit may be connected to a first intermediate electrode 401, which may be considered as an element support electrode. The other terminals 242 of the respective capacitor elements 240 may be connected to a second intermediate electrode 402, which may be considered as an element support electrode as well. In the same way, the capacitor elements 340 of the third capacitor unit being on the substantially same voltage level with one terminal 341 may be connected to also an element support electrode, and the respective other terminals 342 of the capacitor elements 340 of the third capacitor unit may be connected to another element support electrode. It should be noted that in Fig. 1, the support electrode 401 of the second capacitor unit is electrically isolated from the element support electrode 401 of the third capacitor unit, as there is a significant voltage difference between these both element support electrodes. The capacitor elements and therefore the capacitor lines in Fig. 1 have a longitudinally extension along a longitudinal axis A of the entire capacitor arrangement. It should be noted that it is not mandatorily to arrange the capacitor elements 240, 340 in parallel. In particular, the capacitor elements may also be arranged inclined with respect to each other, which will be described in further detail with respect to Figs. 15 and 16. In Fig. 1, the second terminal 102 and the third terminal 203 together are realized as a common electrode 423, which is denoted as the first electrode. In the same way, the fourth terminal 204 and the fifth terminal 305 together are realized as a common electrode 445, which is denoted as the second electrode. In particular, the second electrode can be formed as a taper, wherein the taper may include a post isolator and a bushing for the connection of the first terminal 101 of the first capacitor unit 100. The arrangement of the second terminal and the third terminal will be described in further detail with respect to Fig. 2.

Fig. 2 illustrates a detailed view of the capacitor arrangement close to the second terminal 102 and the third terminal 203. The capacitor lines of the second capacitor unit 200 with their third terminal are connected to the first electrode 423. Also the capacitor lines of the first capacitor unit 100 are connected with their second terminal 102 to the first electrode 423. If the first terminal 101 is connected to the high voltage level and the sixth terminal 306 is connected to ground potential, given that the capacitor elements/lines are identical for the first, second, and third capacitor unit, the first electrode 423 has a voltage level of 2/3 of the high voltage potential. The sixth terminal and the respective electrode 306 are connected to ground potential by way of the duct 4, which is connected to a conductor plate 6. The first electrode 423 is supported by post isolators 5 in order to maintain the isolation distance and/or the mechanical stability.

Fig. 3 illustrates a cross-sectional view of a capacitor arrangement 2 of Fig. 1, however, within a housing 3. As can be seen from Fig. 3, the first capacitor unit 100 comprises three capacitor lines 110, 120, and 130. It should be understood, that instead of three capacitor lines, also one solid capacitor line may be used, having for example a larger diameter in order to have the same capacity as the sum of the three capacitor lines of the first capacitor unit 100. This is illustrated in further detail with respect to Fig. 8. The second capacitor unit 200 comprises three capacitor lines 210, 220, and 230, which are arranged in one hemisphere. The capacitor lines 310, 320, 330 of the third capacitor unit 300 are arranged in the other hemisphere. Together with the housing 3, the capacitor unit 2 forms gas insulated switch gear component 1.

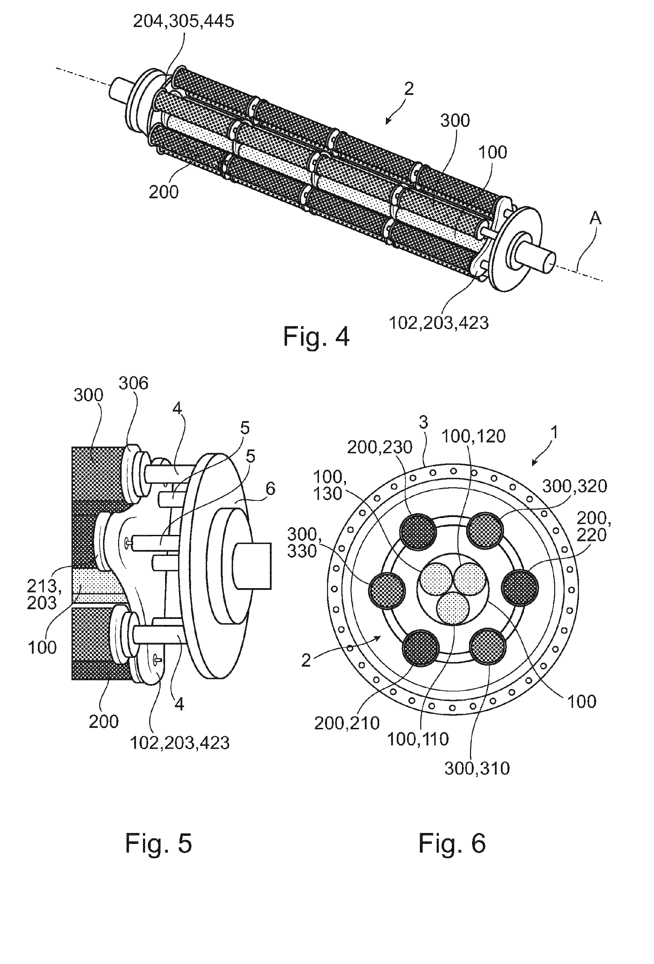

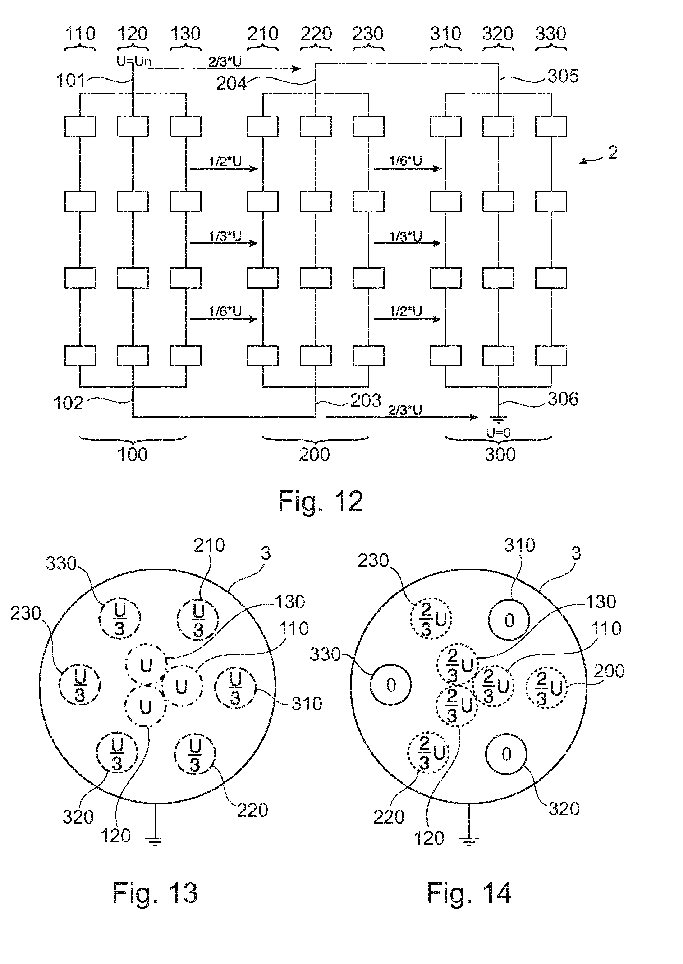

Fig. 4 illustrates an alternative embodiment of a capacitor arrangement 2. The structural buildup of the capacitor arrangement of Fig. 4 will be illustrated with respect to Fig. 12. The macroscopic structure of the capacitor arrangement of Fig. 12 is similar to that illustrated in Fig. 11. This means, that the capacitor arrangement of Fig. 12 also comprises a first capacitor unit 100, a second capacitor unit 200 and a third capacitor unit 300. The first terminal of the capacitor unit 100 is connected to the high voltage potential. The second terminal 102 is connected to the third terminal 203 of the second capacitor unit. The fourth terminal 204 of the second capacitor unit 200 is connected to the fifth terminal 305 of the third capacitor unit 300 and the sixth terminal 306 of the third capacitor unit 300 is connected to ground potential. As the capacitor lines of the second capacitor unit are not arranged beside to each other any longer, but alternately to the capacitor lines of the third capacitor unit, as can be seen in Fig. 4, Fig. 4 does not provide element support electrodes as compared to Fig. 1, reference 401, 402. Therefore, there is no connection provided between respective terminals of the capacitor elements, so that a plurality, in Fig. 4 four serially connected capacitor elements form a capacitor line, however, without intermediate connections to other capacitor lines. This is also illustrated in Fig. 12, where the capacitor elements of the respective capacitor lines do not have intermediate connections, but are stacked in capacitor lines. As can be seen from the structural overview of Fig. 12, the fourth terminal 204 and the fifth terminal 305 are connected to the second electrode 445. The second electrode may be formed as a taper, as already described with respect to Fig. 1. However, the other side of the capacitor arrangement may be somewhat different, as the connection of the second terminal and the third terminal 102, 203 and the alternated arrangement of the capacitor lines of the second capacitor unit and the capacitor lines of the third capacitor unit requires a different shape of the first electrode 423. This will be described in further detail with respect to Fig. 5.

Fig. 5 illustrates a detailed overview of the first electrode 423. As the plurality of capacitor lines of the second capacitor unit 200 and the capacitor lines of the third capacitor unit 300 are no longer arranged in groups, but alternately, the shape of the first electrode 423 must be designed so as to connect the second terminals of the capacitor unit 100, or the capacitor lines of the capacitor unit 100, respectively, on the one hand, and the third terminals of the capacitor lines of the second capacitor unit 200. The sixth terminals 306 of the capacitor lines of the third capacitor unit 300 are connected via ducts 4 to the conductor plate 6. The first electrode 423 however, is isolated over the conductor plate 6 by way of post isolators 5. Thus, the isolation distance between the first electrode being of 2/3 of the high voltage potential Un over the conductor plate 6 on ground potential is maintained.

Fig. 6 illustrates a cross-sectional illustration of the capacitor arrangement 2 of Fig. 4, however together with a housing 3. As can be seen from Fig. 6, the capacitor arrangement includes a first capacitor unit 100 having a first, second, and third capacitor line 110, 120, 130, a second capacitor unit 200 having a first, second, and third capacitor line 210, 220, 230, and a third capacitor unit 300 having a first, second, and third capacitor line 310, 320, 330. The capacitor lines of the first capacitor unit 100 are grouped in the center. It should be understood, that instead of three capacitor lines, also one solid capacitor line can be provided for the first capacitor unit 100, which is illustrated with respect to Fig. 8. The capacitor lines of the second capacitor unit 200 and the capacitor lines of the third capacitor unit 300 are arranged alternately along a circumference of the virtual circuit around the first capacitor unit 100.

Fig. 7 illustrates an alternative embodiment, where the second capacitor unit 200 and the third capacitor unit 300 have a cross-section which is different from that which is described with respect to Figs. 1 to 6. The cross section of the capacitor unit 200 and capacitor unit 300 is in form of a kidney and follows a circular arc. Thus, the capacitor unit can be designed more flatly. In Fig. 7, the first capacitor unit 100 comprises three capacitor lines 110, 120, 130. The entire capacitor arrangement is surrounded by a housing 3.

Fig. 8 illustrates a further exemplary embodiment, which is illustrated according to the cross-sectional view thereof. The general buildup is similar to that of Fig. 7, however, the first capacitor unit 100 is designed as a solid single capacitor line.

Fig. 9 illustrates an exemplary embodiment of the arrangement of the first electrode 423 and the sixth terminal 306 according to Fig. 1. The sixth terminal 306 is formed like a kidney, whereas the first electrode 423 has a corresponding form, so that the first electrode 423 and the sixth terminal together are enveloped by a virtual circuit E. As the sixth terminal is on ground potential and the first electrode 423 is on 2/3 of the high voltage potential, a distance must be maintained between the sixth terminal 306 and the first electrode 423, as can be seen in Fig. 9.

Fig. 10 illustrates the first electrode arrangement according to the capacitor arrangement illustrated with respect to Fig. 4. Fig. 10 illustrates the first electrode 423 in form of a triangle, wherein the corners of the triangle are rounded, in particular having the same rounding as the electrodes of the sixth terminal 306. The sides of the triangle are concave, so as to maintain the distance between the sixth terminal. Also in Fig. 10, the sixth terminal 306 lies on ground potential, whereas the first electrode 423 is on 2/3 of the high voltage potential Un. Therefore, a certain distance must be maintained between the sixth terminal (s) 306 and the first electrode 423. The first electrode 423 and the sixth terminals 306 are together enveloped by a virtual circle E, as can be seen in Fig. 10. It should be noted that the arrangement of Fig. 10, which is illustrated for three capacitor lines, may also be modified to arrangement having for example four capacitor lines for the second and third capacitor unit. In this case, the first electrode may be formed as a square having rounded corners, wherein the sides of the square are concave. Electrode 423 then forms more or less a cross. It should be noted that this embodiment may also be adapted to five and more capacitor lines for the second, and third capacitor unit, respectively. Of course, a respective number of sixth terminals 306 will be provided between two neighbored corners of the square or pentagon or the like.

Fig. 13 illustrates a field distribution and respective potentials seen at the cross-sectional level of the capacitor arrangement 2 in a housing 3 close to the first terminal level, i.e. the lavel of the second electrode. The first, second, and third capacitor line of the first capacitor unit are on the voltage level of the high voltage U, which corresponds to the voltage level of the first terminal. The voltage level of the first, second, and third capacitor lines 210, 220, 230 of the second capacitor line as well as the first, second, and third capacitor line 310, 320, 330 of the third capacitor unit, which are on the voltage level of the second electrode, are on the voltage level of 1/3 of the high voltage potential. The housing 3 is on ground potential.

Fig. 14 illustrates the field distribution and the voltage levels of the same capacitor arrangement, which is illustrated in Fig. 4, however, at the level of the first electrode, i.e. the second and third terminal. As can be seen from Fig. 14, the first, second, and third capacitor line 110, 120, 130 of the first capacitor unit are on 2/3 of the high voltage potential, as well as the first, second, and third capacitor lines 210, 220, 230 of the second capacitor unit. The first, second, and third capacitor line 310, 320, 330 of the third capacitor unit are already on ground potential, like the housing 3.

Although with respect to Figs. 1 to 6 a parallel arrangement of the capacitor elements is described, it is also possible to arrange the capacitor lines inclined with respect to each other. Fig. 15 illustrates a cross-sectional view of the respective elements, wherein the capacitor lines of the first capacitor unit are centrically arranged and coaxially with respect to the inclined capacitor lines of the second and third capacitor unit. The first capacitor line 210 of the second capacitor unit is inclined with respect to the first capacitor line 110 of the first capacitor unit, and is also inclined with respect to the first capacitor line 310 of the third capacitor unit. The arrangement of the capacitor line 210 and the capacitor line 310 is rotationally repeated thrice, and therefore illustrated only once. The half side view of Fig. 16 illustrates the spatial arrangement of the first capacitor lines 110 of the first capacitor unit, 210 of the second capacitor unit and 310 of the third capacitor unit. The first electrode 423 as well as the second electrode 445 are illustrated likewise. The potential difference between the first electrode 423 and the ground potential of the housing, which may also be the potential of the sixth terminal 306 is 2/3 of the high voltage potential. The second electrode 445 is on 1/3 of the high voltage potential. The voltage difference between the first terminal 101 and the second electrode 445 is 2/3 of the high voltage potential, wherein the potential of the first terminal 101 is the high voltage potential. Consequently, the voltage difference between the second electrode 445 and the housing 3 is 1/3 of the high voltage potential.

It should be noted that instead of the inclined arrangement of the capacitor lines, as illustrated in Fig. 16, in particular when using a plurality of capacitor elements for each of the capacitor lines, the capacitor elements of a respective capacitor line may be arranged in parallel, but in stepped distance with respect to each other. In other words, referred to Fig. 16, the capacitor line 210 then is not inclined but is stepped with a plurality of capacitor elements, as well as the capacitor line 310 is stepped with a plurality of capacitor elements. The stepped distance increases with increasing potential between the respective capacitor elements.

It should be noted that the invention may be applied to DC applications as well as AC applications. In particular, the invention may be applied as a filtering unit /and or as a voltage buffering for high voltage DC transmission applications.

It should be noted that the term "comprising" does not exclude other elements or steps and that "a" or "an" does not exclude a plurality. Also elements described in association with different embodiments may be combined.

It should be noted that the reference signs in the claims shall not be construed as limiting the scope of the claims.

### References

| | |
|---|---|
| 1 | gas insulates switchgear component |
| 2 | capacitor arrangement |
| 3 | housing of a gas insulated switchgear component |
| 4 | bushing, duct |
| 5 | isolator, post isolator |
| 6 | conductor plate, bus plate |
| 100 | first capacitor unit |
| 101 | first terminal |
| 102 | second terminal |
| 110 | first capacitor line of first capacitor unit |
| 111 | first terminal of first capacitor line of first capacitor unit |
| 112 | second terminal of first capacitor line of first capacitor unit |
| 120 | second capacitor line of first capacitor unit |
| 121 | first terminal of second capacitor line of first capacitor unit |
| 122 | second terminal of first capacitor line of first capacitor unit |
| 130 | third capacitor line of first capacitor unit |
| 131 | first terminal of third capacitor line of first capacitor unit |
| 132 | second terminal of third capacitor line of first capacitor unit |
| 140 | capacitor element of first capacitor unit |
| 150 | capacitor element of first capacitor unit |
| 200 | second capacitor unit |
| 203 | third terminal |
| 204 | fourth terminal |
| 210 | first capacitor line of second capacitor unit |
| 213 | third terminal of first capacitor line of second capacitor unit |
| 214 | fourth terminal of first capacitor line of second capacitor unit |
| 220 | second capacitor line of second capacitor unit |
| 223 | third terminal of second capacitor line of second capacitor unit |
| 224 | fourth terminal of second capacitor line of second capacitor unit |
| 230 | third capacitor line of second capacitor unit |
| 233 | third terminal of third capacitor line of second capacitor unit |
| 234 | fourth terminal of third capacitor line of second capacitor unit |
| 240 | capacitor element of second capacitor unit |
| 241 | first terminal of capacitor element of second capacitor unit |
| 242 | second terminal of capacitor element of second capacitor unit |
| 250 | capacitor element of second capacitor unit |
| 300 | third capacitor unit |
| 305 | fifth terminal |
| 306 | sixth terminal |
| 310 | first capacitor line of third capacitor unit |
| 315 | fifth terminal of first capacitor line of third capacitor unit |
| 316 | sixth terminal of first capacitor line of third capacitor unit |
| 320 | second capacitor line of third capacitor unit |
| 325 | fifth terminal of second capacitor line of third capacitor unit |
| 326 | sixth terminal of second capacitor line of third capacitor unit |
| 330 | third capacitor line of third capacitor unit |
| 335 | fifth terminal of third capacitor line of third capacitor unit |
| 336 | sixth terminal of third capacitor line of third capacitor unit |
| 340 | capacitor element of third capacitor unit |
| 341 | first terminal of capacitor element of third capacitor unit |
| 342 | second terminal of capacitor element of third capacitor unit |
| 350 | capacitor element of third capacitor unit |
| 401 | first intermediate electrode / element support electrode |
| 402 | second intermediate electrode / element support electrode |
| 423 | first electrode |
| 445 | second electrode |

## Claims

1. High voltage capacitor arrangement for a capsuled gas insulated high voltage application, the capacitor arrangement (2) comprises:
a first capacitor unit (100) having a longitudinal extension and having a first terminal (101) and a second terminal (102),
a second capacitor unit (200) having a longitudinal extension and having a third terminal (203) and a fourth terminal (204),
a third capacitor unit (300) having a longitudinal extension and having a fifth terminal (305) and a sixth terminal (306),
wherein the second terminal is electrically connected to the third terminal and the fourth terminal is electrically connected to the fifth terminal, such that the first capacitor unit, the second capacitor unit and the third capacitor unit are electrically connected in series and spatially arranged beside one to another.

2. High voltage capacitor arrangement according to claim 1, wherein the second capacitor unit (200) comprises at least three capacitor lines (210, 220, 230) including a first capacitor line (210), a second capacitor line (220) and a third capacitor line (230), one terminal (213, 223, 233) of each thereof being connected to the third terminal (203) and the other terminal (214, 224, 234) of each thereof being connected to the fourth terminal (204), and the third capacitor unit (300) comprises at least three capacitor lines (310, 320, 330) including a first capacitor line (310), a second capacitor line (320) and a third capacitor line (330), one terminal (315, 325, 335) of each thereof being connected to the fifth terminal (305) and the other terminal (316, 326, 336) of each thereof being connected to the sixth terminal(306), wherein the at least three capacitor lines of the second capacitor unit and the at least three capacitor lines of the third capacitor unit are distributed over a circumference around the first capacitor unit (100).

3. High voltage capacitor arrangement according to claim 2, wherein the capacitor lines (210, 220, 230) of the second capacitor unit (200) and the capacitor lines (310, 320, 330) of the third capacitor unit (300) are coaxially arranged about a longitudinal axis (A) defined by the overall shape of the first capacitor unit (100).

4. High voltage capacitor arrangement according to any one of claims 2 and 3, wherein the at least three capacitor lines (210, 220, 230) of the second capacitor unit (200) and the at least three capacitor lines (310, 320, 330) of the third capacitor unit (300) are alternatedly and evenly distributed over a circumference around the first capacitor unit (100).

5. High voltage capacitor arrangement according to any one of claims 2 to 4, wherein cross sections when seen in the direction of the longitudinal axis (A) of the at least three capacitor lines (210, 220, 230) of the second capacitor unit (200) beside one to another are arranged along a circular arc and cross sections when seen in the direction of the longitudinal axis (A) of the at least three capacitor lines (310, 320, 330) of the third capacitor unit (300) beside one to another are arranged along a circular arc.

6. High voltage capacitor arrangement according to any one of claims 1 to 5, wherein the first capacitor unit (100) comprises at least three parallel capacitor lines (110, 120, 130) including a first capacitor line (110), a second capacitor line (120) and a third capacitor line (130), one terminal (111, 121, 131) of each thereof being connected to the first terminal (101) and the other terminal (112, 122, 132) of each thereof being connected to the second terminal (102).

7. High voltage capacitor arrangement according to any one of claims 1 to 6, wherein the second capacitor unit (200) and the third capacitor unit (300) each having a cross section crossing the longitudinal extension of the respective capacitor unit, the cross section having a longitudinal extension along a circular arc.

8. High voltage capacitor arrangement according to any one of claims 1 to 7, wherein the second terminal (102) and the third terminal (203) are provided by a first electrode (423) and the fourth terminal (204) and the fifth terminal (305) are provided by a second electrode (445).

9. High voltage capacitor arrangement according to any one of claims 1 to 8, wherein at least one of the capacitor units (100, 200, 300) comprises a plurality of capacitor elements (140, 150; 240, 250; 340, 350) connected in series.

10. High voltage capacitor arrangement according to claim 9, wherein capacitor elements (140, 150) of the first capacitor unit (100), capacitor elements (240, 250) of the second capacitor unit (200) and capacitor elements (340, 350) of the third capacitor unit (300) are substantially of the same longitudinal dimension.

11. High voltage capacitor arrangement according to any one of claims 9 and 10, wherein intermediate terminals (241, 242) of parallel capacitor elements (240) of the second capacitor unit (200) of corresponding voltage levels are connected to respective electrodes in form of an element support electrode (401, 402), and intermediate terminals (341, 342) of parallel capacitor elements (340) of the third capacitor unit (300) of corresponding voltage levels are connected to respective electrodes in form of an element support electrode (401, 402).

12. High voltage capacitor arrangement according to any one of claims 8 to 11, wherein at least one of the first electrode, the second electrode and the element support electrodes are dimensioned so as to extend over the outer cross sectional dimension of the respective capacitor unit (100, 200, 300) and comprising a rounded edge (405).

13. High voltage capacitor arrangement according to any one of claims 7 to 12, wherein, when seen in the direction of the longitudinal axis (A), the first electrode has a cross section being complementarily shaped to a cross section of the sixth terminal (306) and together with the sixth terminal at least partially forming a circular enveloping curve (E).

14. High voltage capacitor arrangement according to any one of claims 7 to 12, wherein, when seen in the direction of the longitudinal axis (A), the first electrode has a cross section in form of a equilateral triangle having rounded corners and concave sides.

15. High voltage capacitor arrangement according to any one of claims 2 to 14, wherein one of capacitor lines (210, 220, 230) of the second capacitor unit (200) is inclined with respect to a respective capacitor line (110, 120, 130) of the first capacitor unit (100) and a respective capacitor line (310, 320, 330) of the third capacitor unit (300), such that the isolating distance between the capacitor line (110, 120, 130) of the first capacitor unit (100) and the capacitor line (210, 220, 230) of the second capacitor unit (200) at the second and third terminal (102, 203) is smaller than the isolating distance between the capacitor line (110, 120, 130) of the first capacitor unit (100) and the capacitor line (210, 220, 230) of the second capacitor unit (200) at the first and fourth terminal (101, 204), and the isolating distance between the capacitor line (210, 220, 230) of the second capacitor unit (200) and the capacitor line (310, 320, 330) of the third capacitor unit (300) at the fourth (204) and fifth terminal (305) is smaller than the isolating distance between the capacitor line (210, 220, 230) of the second capacitor unit (200) and the capacitor line (310, 320, 330) of the third capacitor unit (300) at the third and sixth terminal (203, 306).

16. Capsuled gas insulated capacitor comprising:
a housing tube (3),
a high voltage capacitor arrangement (2) according to any one of claims 1 to 14,
wherein the second capacitor unit (200) and the third capacitor unit (300) have an equivalent isolation distance over the housing.

17. Capsuled gas insulated capacitor comprising:
a housing tube (3),
a high voltage capacitor arrangement (2) according to claim 15,
wherein the first terminal (101) of the capacitor unit (100) is arranged on a center axis of the housing and the sixth terminal (306) of the third capacitor unit (300) is connected the housing.

18. Use of a high voltage capacitor arrangement according to any one of claims 2 to 14 for one application out of a group, the group consisting of electric filtering in high voltage DC applications and voltage buffering in high voltage DC applications.
